# EUROPÄISCHE PATENTSCHRIFT

(11) **EP 0 488 938 B1**
(45) Veröffentlichungstag und Bekanntmachung des Hinweises auf die Patenterteilung: **18.09.1996**
(21) Anmeldenummer: 91710050.5
(22) Anmeldetag: 27.11.1991
(51) Int. Cl.: B60R 21/26, F42B 3/04, F42B 39/20

(54) **Gasgenerator, insbesondere Rohrgasgenerator für Airbag**
Gas generator, in particular tubular gas generator for an airbag
Génerateur de gaz, en particulier générateur de gaz tubulaire pour coussin d'air

(30) Priorität: 28.11.1990 DE 4037769
(43) Veröffentlichungstag der Anmeldung: 03.06.1992
(73) Patentinhaber: Dynamit Nobel GmbH Explosivstoff- und Systemtechnik, 53840 Troisdorf (DE)
(72) Erfinder: Kraft, Josef, W-8438 Berg (DE); Bretfeld, Anton, W-8150 Fürth (DE)

(56) Entgegenhaltungen:
- DE-A- 3 824 469
- DE-A- 4 001 864
- US-A- 4 561 675
- US-A- 4 927 175

## Beschreibung

Die Erfindung betrifft einen Gasgenerator, insbesondere einen Rohrgasgenerator für Airbag, mit einem Gehäuse zur Aufnahme eines gasentwickelnden Materials und mindestens einer Selbstanzündvorrichtung zum Zünden des gasentwicklenden Materials bei einer vorgegebenen Mindesttemperatur des Gehäuses nach dem Oberbegriff des Anspruchs 1.

Ein Gasgenerator ist aus DE 39 14 690 C2 bekannt. Das Gehäuse dieses Gasgenerators besteht aus zwei ineinandergesteckten Rohren (Außen- und Innenrohr), die einen radialen Abstand voneinander aufweisen. Das Außenrohr ist an seinen stirnseitigen Enden durch im wesentlichen scheibenförmige Verschlußdeckel gasdicht verschlossen. Das Innenrohr umschließt ein gasentwickelndes Material (druckgaserzeugende Ladung), die von einer elektrischen Anzündvorrichtung gezündet wird. Die elektrische Anzündvorrichtung ist an einem der beiden Verschlußdeckel befestigt. Die Anzündvorrichtung ist mit einer Anzündladung versehen, die elektrisch gezündet wird und ihrerseits das gasentwickelnde Material zündet. Der Anzündladung beigemischt ist ein selbstzündendes Material, das bei Erreichen einer bestimmten Mindesttemperatur zündet. Diese Mindesttemperatur liegt weit unterhalb der Selbstzündungstemperatur der druckgaserzeugenden Ladung. Das selbstzündende Material hat die Funktion einer thermischen Sicherung für den Gasgenerator. Im Falle eines Brandes (beispielsweise Fahrzeugbrand) oder im Falle eines Brandes während der Lagerung und des Transports des Rohrgasgenerators wird dieser erhitzt. Durch die Aufheizung verschlechtern sich die mechanischen Eigenschaften des Gehäuses, das bei hohen Temperaturen nicht mehr die gegen ein Zerbersten erforderliche Druckstabilität aufweist. Aufgrund der Erhitzung des Gehäuses (Rohre und Verschlußdeckel) erwärmt sich auch die Anzündvorrichtung und das in dieser untergebrachte selbstzündende Material, das bei Erreichen seiner Selbstzündungstemperatur, bei der die mechanischen Eigenschaften des Gehäuses noch ausreichend gut sind, das gasentwickelnde Material zündet. Das Gehäuse des bekannten Gasgenerators besteht aus Aluminium. Aluminium weist eine relativ hohe Wärmeleitfähigkeit auf. Aufgrund dieser hohen Wärmeleitfähigkeit besteht die Gefahr, daß sich das gasentwickelnde Material über das Gasgeneratorgehäuse stark erhitzt, so daß bei Zündung eine derart starke Gasentwicklung entsteht, daß das Gehäuse birst.

In der DE-C1-38 24 469 ist ein gattungsgemäßer Gasgenerator offenbart, dessen Selbstanzündvorrichtung zusätzlich über einen thermisch isolierenden Kunststoff in das Gehäuse des Gasgenerators eingesetzt ist.

Der Erfindung liegt die Aufgabe zugrunde, einen Gasgenerator nach dem Oberbegriff des Anspruchs 1 derart zu verbessern, daß die thermische Sicherung bei einem Temperaturanstieg des Gehäuses anspricht, bevor das gasentwickelnde Material eine zu hohe Temperatur erreicht und dabei das gasentwickelnde Material gegenüber einer über das Gehäuse übertragenden Erwärmung zu schützen.

Erfindungsgemäß wird diese Aufgabe durch das kennzeichnende Merkmal des Anspruchs 1 gelöst.

Es ist vorgesehen, daß das Gehäuse lediglich im Bereich der Selbstanzündvorrichtung aus einem ersten Material mit einer hohen Wärmeleitfähigkeit besteht und ansonsten aus einem zweiten Material mit einer gegenüber dem ersten Material wesentlich geringeren Wärmeleitfähigkeit besteht.

Das Gehäuse des Gasgenerators besteht aus zweierlei Arten von Materialien unterschiedlicher Wärmeleitfähigkeit. Der überwiegende Teil des Gehäuses besteht dabei aus einem (zweiten) Material, das eine relativ geringe Wärmeleitfähigkeit aufweist. Als Material kommt hier etwa Edelstahl in Frage. Derjenige Bereich des Gehäuses, in dem die Selbstanzündvorrichtung befestigt ist, besteht aus einem (ersten) Material, dessen Wärmeleitfähigkeit um ein Vielfaches höher ist als diejenige des zweiten Materials. Das Gehäuse wirkt in demjenigen Bereich, in dem es aus dem zweiten Material besteht, wie ein Wärmeisolator, der das gasentwickelnde Material gegen äußere Wärmeeinwirkungen abschirmt. Lediglich in einem recht kleinen Bereich des Gehäuses ist dessen Wärmeleitfähigkeit extrem gut. Bei einer Aufheizung des Gehäuses beispielsweise im Brandfall wird die Wärme (Hitze) schnell zur Selbstanzündvorrichtung weitergeleitet, die in Wärmeleitkontakt mit dem ersten Material des Gehäuses steht. Aufgrund der lokal unterschiedlichen Wärmeleitfähigkeitseigenschaften des Gehäuses, das im Bereich der Selbstanzündvorrichtung seine größte Wärmeleitfähigkeit aufweist, wird erreicht, daß bei einer Erhitzung des Gehäuses die Selbstanzündvorrichtung in jedem Fall ihre Selbstzündungstemperatur erreicht, bevor das gasentwickelnde Material seine Selbstzündungstemperatur bzw. eine zu hohe Temperatur erreicht hat. Damit ist gewährleistet, daß die thermische Sicherung des erfindungsgemäßen Gasgenerators stets zuverlässig, d.h. bevor die Gasentwicklung der druckgaserzeugenden Ladung zu stark geworden ist, anspricht.

Vorteilhafterweise beträgt die Wärmeleitfähigkeit des ersten Materials das 10- bis 20fache derjenigen des zweiten Materials. Dies wird beispielsweise dadurch erreicht, daß das erste Material Aluminium ist, während das zweite Material Edelstahl, z.B. 1.4301 nach DIN 17440 (nichtrostende Stähle) ist.

Um das gasentwickelnde Material auch im gut leitfähigen Bereich bzw. Abschnitt des Gehäuses gegenüber einer über das Gehäuse übertragenen Erwärmung zu schützen, ist vorgesehen, daß das Gehäuse auf seiner Innenseite im Bereich der Selbstanzündvorrichtung eine thermische Isolation aufweist, die den aus dem ersten Material bestehenden Gehäusebereich oder -abschnitt überdeckt, ohne dabei das gasentwickelnde Material gegenüber der Selbstanzündvorrichtung abzuschirmen. Die thermische Isolationsschicht, die die Selbstanzündvorrichtung nicht überdeckt, trägt zu einer zusätzlichen Konzentration des Wärmetransports in dem gut wärmeleitenden Gehäuseabschnitt in Richtung auf die Selbstanzündvorrichtung bei. Damit spricht die thermische Sicherung des erfindungsgemäßen Gasgenerators, d.h. die Selbstanzündvorrichtung, bei einer Erwärmung des Gehäuses bis über die Zündtemperatur der Selbstanzündvorrichtung noch schneller an.

Vorzugsweise ist das Gehäuse mit einem zylindrischen, aus dem zweiten Material bestehenden (Edelstahl-)Außenrohr versehen, dessen beiden stirnseitigen Enden durch Verschlußdeckel verschlossen sind, von denen mindestens einer aus dem ersten Material (Aluminium) besteht, wobei die Selbstanzündvorrichtung an diesem Verschlußdeckel befestigt ist. Die Selbstanzündvorrichtung, die vorzugsweise eine im wesentlichen zylindrische Gestalt aufweist, ist kraft- und formschlüssig in dem Verschlußdeckel integriert. Die Verbindung zwischen der Selbstanzündvorrichtung und dem Verschlußdeckel erfolgt vorteilhafterweise durch ein Verschrauben beider Teile oder durch eine Preßpassung zwischen Selbstanzündvorrichtung und Verschlußdeckel. Durch diese Arten der Verbindung wird ein gut wärmeleitfähiger Kontakt zwischen der Selbstanzündvorrichtung und dem Verschlußdeckel, d.h. dem Gehäuseabschnitt mit guten Wärmeleiteigenschaften, geschaffen.

In vorteilhafter Weiterbildung der Erfindung ist vorgesehen, daß beide Verschlußdeckel aus dem gut wärmeleitenden ersten Material, beispielsweise Aluminium, bestehen und an jedem Verschlußdeckel eine Selbstanzündvorrichtung befestigt ist, die in wärmeleitfähigem Kontakt zum Verschlußdeckel steht. Hierdurch wird erreicht, daß die thermische Sicherung des Gasgenerators bei Erwärmung seines Gehäuses auch dann anspricht, wenn der Gasgenerator sich vornehmlich an einem seiner Enden aufheizt.

Gemäß einer weiteren vorteilhaften Ausgestaltung der Erfindung weist die Selbstanzündvorrichtung ein im wesentlichen zylindrisches Gehäuse aus wärmeleitfähigem Material auf, das in einer zentralen Aufnahmedurchgangsbohrung im Verschlußdeckel angeordnet ist und ein zur druckgaserzeugenden Ladung hin offenes Sackloch aufweist, in dem ein bei einer bestimmten Mindesttemperatur selbstzündendes Material (beispielsweise auf Nitrocellulose-Basis) untergebracht ist. Vorzugsweise ist die Sacklochöffnung als Düse ausgebildet, durch die sich beim Zünden des selbstzündenden Materials eine gebündelte, in das gasentwickelnde Material eindringende "Stichflamme" bildet.

Vorteilhafterweise liegt das selbstzündende Material in dem Sackloch als homogener Preßkörper vor, der gegenüber der Sacklochöffnung durch eine (Bleizinn-)Folie abgedeckt ist, wobei der Rand nach dem Einbau der Folie mit einem geeigneten Lack versiegelt wird. Die Abdeckfolie schützt das selbstzündende Material während der Lagerung, dem Transport und dem Einbau der Selbstanzündvorrichtung in den Gasgenerator vor einem Ausbröckeln und vor Umwelteinflüssen.

Gemäß einer weiteren vorteilhaften Ausgestaltung der Erfindung wird die Zündung des selbstzündenden Materials durch eine Verstärkungsladung verstärkt, deren Zündung durch das selbstzündende Material initiiert wird. Das selbstzündende Material ist vorzugsweise im Bodenbereich des Sacklochs angeordnet, befindet sich also in dem der Außenseite zugewandten Abschnitt der Gehäusewand oder des Verschlußdeckels an exponierter Stelle. Hierdurch ist gewährleistet, daß das selbstzündende Material bei großer Hitzeeinwirkung von außen bis zur Selbstzündungstemperatur erwärmt wird. Wegen der Verstärkung der Zündungsflamme infolge der Zündung der Verstärkungsladung (Borkaliumnitrat) braucht die Menge an selbstzündendem Material, bei dem es sich im allgemeinen um ein Material auf Nitrocellulose-Basis handelt, lediglich verhältnismäßig gering zu sein. Dies hat den Vorteil einer schnellen Aufheizung (geringer Wärmeabfluß aufgrund der geringen Menge) und darüberhinaus den Vorteil, daß die Menge an CO-Gasen bei der Verbrennung des selbstzündenden Material ebenfalls nur gering ist. Würde die Selbstanzündvorrichtung als Verbrennungstoff ausschließlich Nitrocellulose-Material aufweisen, müßte dessen Menge relativ groß sein, um die druckgaserzeugende Ladung sicher zu zünden. Auch diesbezüglich ergeben sich Vorteile durch Einsatz einer Verstärkungsladung.

Vorzugsweise erstreckt sich das Gehäuse der Selbstanzündvorrichtung in axialer Verlängerung des Außenrohres über dessen Verschlußdeckel hinaus. Dieser axiale Bolzen, in dessen Bereich das Gehäuse massiv und damit stabil ist, kann beispielsweise ein Gewinde aufweisen, um den Gasgenerator beispielsweise im Fahrzeug befestigen zu können. Das Gehäuse besteht vorzugsweise aus Aluminium oder einer Aluminium-Legierung.

Nachfolgend wird anhand der Figuren ein Ausführungsbeispiel der Erfindung näher erläutert.

Im einzelnen zeigen:
- Fig. 1: eine Außenansicht eines Rohrgasgenerators, teilweise aufgebrochen und in diesem Bereich im Längsquerschnitt dargestellt,
- Fig. 2: im Längsquerschnitt einen der beiden axialen Endabschnitte mit im Verschlußdeckel angeordneter Sicherheitsselbstanzündvorrichtung und
- Fig. 3: wie Fig. 2, wobei sich das Gehäuse der Sicherheitsselbstanzündvorrichtung in axialer Richtung über den Verschlußdeckel erstreckt.

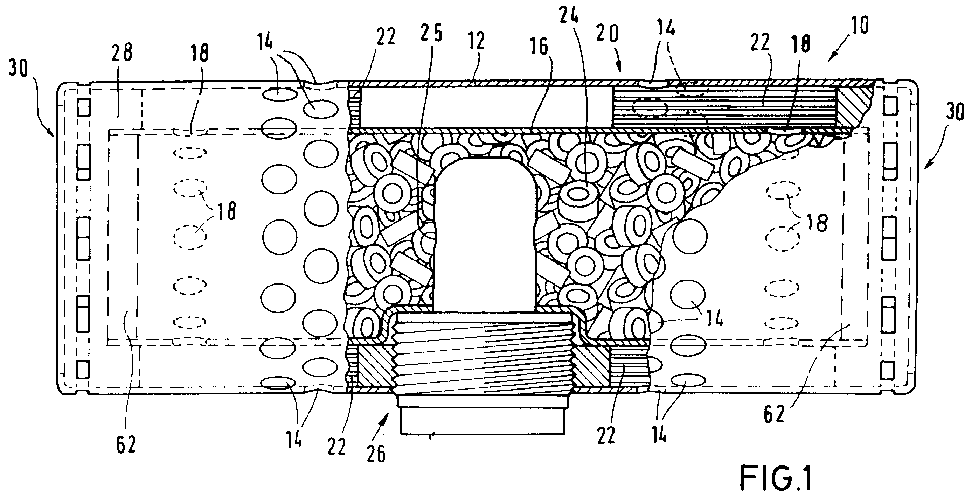

In Fig. 1 ist ein Rohrgasgenerator 10, insbesondere für einen Kraftfahrzeug-Airbag, in Außenansicht, teilweise aufgebrochen und geschnitten, dargestellt. Der Rohrgasgenerator 10 weist ein Edelstahl-Außenrohr 12 auf, in dessen Mantel mehrere Gasaustrittsöffnungen 14 ausgebildet sind. Die Gasaustrittsöffnungen 14 sind gleichmäßig verteilt über vier Umfangslinien des Außenrohres 12 angeordnet. Die Gasaustrittsöffnungen 14 befinden sich im wesentlichen im - in axialer Längserstreckung des Rohrgasgenerators betrachtet - mittleren Abschnitt des Außenrohres 12. Innerhalb des Außenrohres 12 ist ein koaxial zu diesem angeordnetes Edelstahl-Innenrohr 16 untergebracht. In den axialen Endabschnitten des Mantels des Innenrohres 16 sind ebenfalls Gasaustrittsöffnungen 18 ausgebildet, wobei diese Gasaustrittsöffnungen 18 gleichmäßig über zwei Umfangslinien im Bereich der Endabschnitte des Innenrohres 16 verteilt angeordnet sind. Zwischen den Gasaustrittsöffnungen 14 des Außenrohres 12 und den Gasaustrittsöffnungen 18 des Innenrohres 16 besteht also ein axialer Abstand.

Der Außendurchmesser des Innenrohres 16 ist kleiner als der Innendurchmesser des Außenrohres 12, so daß zwischen dem Außen- und dem Innenrohr 12,16 ein Ringzwischenraum 20 entsteht. Dieser Ringzwischenraum 20 ist in seinem sich zwischen den Gasaustrittsöffnungen 14,18 der beiden Rohre 12,16 erstreckenden Bereich mit Metallfilter-Paketen 22 (Edelstahl-Drahtgeflechtmatten) ausgefüllt.

Das Innenrohr 16 ist mit gasentwickelndem Material auf Natriumazid-Basis ausgefüllt, das bei seiner Verbrennung Druckgas erzeugt. Das gasentwickelnde Material, auch druckgaserzeugende Ladung genannt, liegt in Form von sogenannten Pellets 24 vor, die ungeordnet in dem Innenrohr 16 untergebracht sind. Eine elektrische Anzündeinheit 26 zum Zünden der druckgaserzeugenden Ladung ist an den beiden Rohren 12,16 befestigt und ragt durch eine Öffnung im Innenrohr 16 in dieses teilweise hinein.

Der Gasgenerator 10 ist an den stirnseitigen Enden 30 des Außenrohres 12 durch scheibenähnliche Verschlußdeckel 28 verschlossen. An den Enden des Innenrohres 16 sind federelastische, kompressible Scheibenelemente 27 aus Keramikfilz oder -gewebe angeordnet, die einerseits gegen die Pellets 24 und andererseits gegen die Innenflächen der Verschlußdeckel 28 abgestützt sind, wobei sie die Pellets 24 mit Federkraft zusammenhalten. Die federnden Scheibenelemente 27 haben die Aufgabe, die Füllmengentoleranzen des Innenrohres 16 auszugleichen und die Pellets 24 auch dann zusammenzuhalten, wenn das Innenrohr 16 nicht vollständig mit gasentwickelndem Material ausgefüllt ist oder sich im Laufe der Zeit durch Vibrationen die Packungsdichte des Pellets 24 erhöht. Die Verschlußdeckel 28 bestehen aus Aluminium und halten bzw. positionieren auch das Innenrohr 16 in später noch kurz zu beschreibender Weise.

Nachfolgend soll die Funktionsweise des in Fig. 1 dargestellten Gasgenerators 10 beschrieben werden. Die elektrische Anzündeinheit 26, bei der es sich bei diesem Ausführungsbeispiel um einen sogenannten Schichtbrückenzünder mit Initialstoff handelt, wird durch einen definierten elektrischen Impuls gezündet. Bei Verwendung des Rohrgasgenerators gemäß Fig. 1 als Druckgaserzeuger in einem Fahrzeug-Airbag wird dieser elektrische Impuls beispielsweise durch Schließen eines Trägheitsschalters im Falle eines Zusammenstoßes des Kraftfahrzeuges mit einem anderen Gegenstand an die Anzündeinheit 26 angelegt. In der Anzündeinheit 26 wird eine sogenannte Verstärkungsladung gezündet; die dabei entstehenden Anzündschwaden (Flamme, Gas, heide Verbrennungsprodukte) gelangen über im Gehäuse der Anzündeinheit 26 vorgesehene Öffnungen 25 in den Innenraum des Innenrohres 16, wo sie die (Treibladungs-)Pellets 24 gleichmäßig und gleichzeitig zünden. Im Innenrohr 16 werden je nach Ausführung eine unterschiedliche Menge an gasentwickelndem Material in Gas mit einem Druck von ca. 200 bar umgesetzt. Die heißen Gase, die zu ca. 95 % aus Stickstoff bestehen, gelangen über die Gasaustrittsöffnungen 18 an den Enden des Innenrohres 16 aus diesem heraus zu den Filterpaketen 22. Die Filterpakete 22 haben die Aufgabe, die Gase zu kühlen und von Partikeln (Feststoffen) und Kondensaten zu reinigen. Die derart abgekühlten und gereinigten Gase treten über die Gasaustrittsöffnungen 14 im Außenrohr 12 aus. Der hier beschriebene Gasgenerator 10 erzeugt in einer Zeit von ca. 30 Millisekunden in einem Testvolumen von 60 dm³ einen Gasdruck von ca. 3 bar.

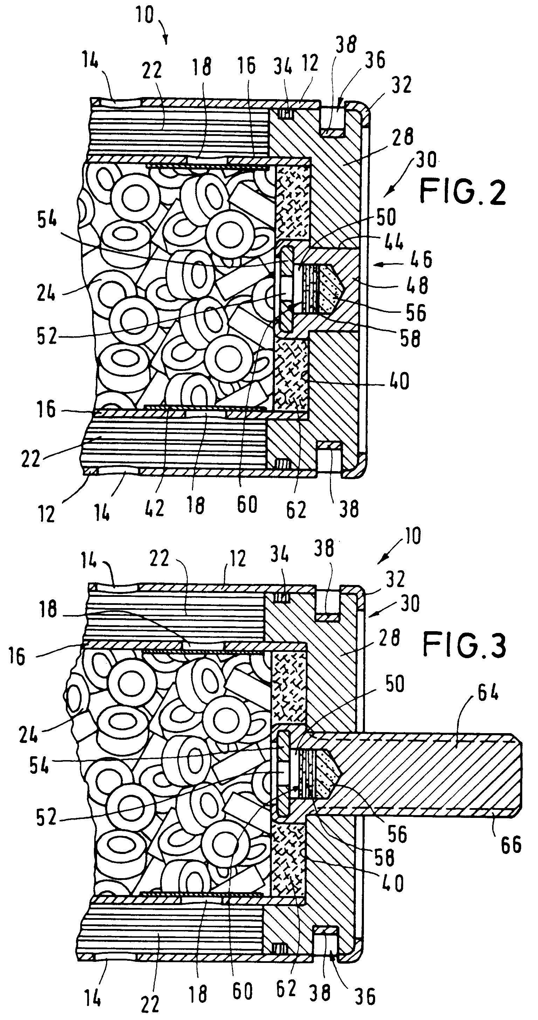

Nachfolgend wird auf die Fign. 2 und 3 eingegangen, in denen die Positionierung des Innenrohres 16 an den Verschlußdeckeln 28 des Außenrohres 12 und die Anordnung einer thermischen Sicherheitsselbstanzündvorrichtung in den Verschlußdeckeln 28 im einzelnen dargestellt ist. Wie anhand der Fign. 2 und 3 zu erkennen ist, wird der Verschlußdeckel 28 am stirnseitigen Ende 30 vom Außenrohr 12 umschlossen. Das in axialer Richtung über den Verschlußdeckel 28 überstehende Ende des Außenrohres 12 ist umgebördelt, was bei 32 angedeutet ist. Zum seitlichen Abdichten des Verschlußdeckels 28 gegenüber der Innenfläche des Außenrohres 12 ist eine Dichtung 34 vorgesehen. Ferner weist der Verschlußdeckel 28 eine Umfangsnut 36 auf, in die nach innen gerichtete Innenvorsprünge 38 des Außenrohres 12 eingreifen. Die Innenvorsprünge 38 sind beispielsweise durch mehrfaches Einkerben des Außenrohres 12 entstanden.

Auf der dem stirnseitigen Ende des Innenrohres 16 zugewandten Innenseite ist der Verschlußdeckel 28 mit einer zentralen kreisrunden Ausnehmung 40 versehen. In die Ausnehmung 40 ragt der Endabschnitt des Innenrohres 16 hinein, der in der Ausnehmung 40 ohne radiales Spiel leicht klemmend eingesteckt ist. Im Bereich der Gasaustrittsöffnungen 18 liegt auf der Innenseite des Innenrohres 16 eine bei Zündung der druckgaserzeugenden Ladung zerstörbare gasdichte Folie an, die das Eindringen der Pellets 24 in die Gasaustrittsöffnungen 18 und ein Abrieb der Pellets 24 verhindert sowie einen Feuchtigkeitsschutz für die druckgaserzeugende Ladung bildet.

In dem Verschlußdeckel 28 ist eine zentrale Aufnahmedurchgangsbohrung 44 ausgebildet, in die die (Sicherheits-)Selbstanzündvorrichtung 46 eingesteckt ist. Die Selbstzündvorrichtung 46 weist einen zylindrischen Gehäusekörper 48 auf, der am stirnseitigen Ende 30 des Gasgenerators 10 bündig mit dem VerschluBdeckel 28 abschließt und innen über den Boden der Ausnehmung 40 übersteht. In diesem überstehenden Bereich ist der Gehäusekörper 48 verbreitert; über den durch diese Verbreiterung entstehenden Außenringansatz stützt sich der Gehäusekörper 48 gegen den Verschlußdeckel 28 ab. Der Gehäusekörper 48 ist mittels einer Preßpassung in die Aufnahmedurchgangsbohrung 44 des Verschlußdeckels 28 eingepreßt.

In den zylindrischen Gehäusekörper 48 ist ein axiales Sackloch 50 eingebracht, das zum Innenrohr 16 hin, also zum gasentwickelnden Material hin, offen ist. Die Öffnung 52 ist von einer Ringscheibe 54 gebildet, die an ihrem Umfang von den bis ins Innenrohr 16 hineinragenden Endabschnitt des Gehäusekörpers 48 umschlossen ist. Dieser Endabschnitt des Gehäusekörpers 48 ist um die Ringscheibe 54 umgebördelt, die auf diese Weise mit dem Gehäusekörper 48 fest verbunden ist.

Das Sackloch 50 ist teilweise mit ab einer bestimmten Temperatur verbrennendem Material gefüllt. Das Material ist zweischichtig aufgebaut, wobei die erste Materialschicht 56 (das eigentliche selbstzündende Material) im Bereich des Bodens des Sacklochs 50 angeordnet ist und von einer zweiten Materialschicht 58 (der Verstärkungsladung) überdeckt ist. Auf der Oberfläche der zweiten Materialschicht 58 liegt eine Schutzfolie 60 auf. Das nach innen über den Boden der Ausnehmung 40 überstehende Ende des Gehäusekörpers 48 ist von einem Keramikfilz oder -gewebe 62 umgeben, das auf der Innenseite des Verschlußdeckels 28 anliegt und die Ausnehmung 40 nahezu vollständig ausfüllt. Infolge seiner Struktur hat das Keramikfilz oder -gewebe 62 federelastische Eigenschaften, aufgrund derer es gegen die Pellets 24 drückt und diese zusammenhält.

Nachfolgend soll kurz die Funktionsweise der in Form der Selbstanzündvorrichtung 46 vorliegenden thermischen Sicherung des Gasgenerators 10 beschrieben werden. Bei einer Erwärmung des Gasgenerators 10 beispielsweise im Brandfalle erwärmt sich das aus den Rohren 12,16 und den Verschlußdeckeln 28 bestehende Gasgeneratorgehäuse. Da das Material (Edelstahl) der Rohre 12,16 lediglich eine schlechte Wärmeleitung erlaubt, ist der Gasgenerator 10 in seinem zylindrischen Gehäusebereich (Rohre 12,16) thermisch gut isoliert; die äußere Hitze wird über die Rohre 12,16 nicht oder kaum bis zu den Pellets 24 übertragen. Anders sieht die Situation an den Verschlußdeckeln 28 aus, die aus Aluminium, also einem Material mit einer gegenüber Edelstahl um ca. das 15fache größeren Wärmeleitfähigkeit, bestehen (die Wärmeleitfähigkeit von Aluminium beträgt ca. 204 W/mK, während die Wärmeleitfähigkeit von Edelstahl etwa 14 W/mK beträgt). Die äußere Hitze wird also über die Verschlußdeckel 28 gut und schnell zum Gehäusekörper 48 der Selbstanzündvorrichtung 46 weitergeleitet. Dabei ist zu beachten, daß der Gehäusekörper 48 selbst mit einem seiner stirnseitigen Enden bündig mit dem Verschlußdeckel 28 abschließt, also direkt der durch den Brand erzeugten Hitze ausgesetzt ist. Der Gehäusekörper 48 selbst besteht ebenfalls aus einem gut wärmeleitenden Material (Aluminium). Durch das Keramikfilz oder -gewebe 62 auf der Innenseite jedes Verschlußdeckels 28 wird eine Wärmeabgabe vom Verschlußdeckel zu den Pellets 24 und damit deren Selbstzündung verhindert. Das Keramikfilz oder -gewebe 62 muß jedoch nicht notwendigerweise vorhanden sein, da die thermische Sicherung wegen der extrem guten Wärmeleitung in den Verschlußdeckeln 28 in jedem Fall angesprochen hat, bevor sich die druckgaserzeugende Ladung bis zu ihrer Selbstzündungstemperatur erwärmt hat.

Von dem brennbaren Material im Gehäusekörper 48 weist die erste Materialschicht 56 eine geringere Selbstzündungstemperatur als die zweite Materialschicht 58 und eine wesentlich geringere Selbstzündungstemperatur als die Pellets 24 auf. Bei sich erwärmendem Gehäusekörper 48 zündet bei erreichen seiner Selbstzündungstemperatur das Material der ersten Materialschicht 56. Durch den Abbrand dieses Materials wird die zweite Materialschicht 58 gezündet; das Material der ersten Materialschicht 56 könnte man als Initialzündmaterial und das Material der zweiten Schicht 58 als Zündverstärkung und Anzündhilfe zum sicheren Zünden der Pellets 24 bezeichnen. Durch die Verbrennung der zweiten Materialschicht wird das gasentwickelnde Material (die eigentliche Treibladung des Gasgenerators 10) gezündet. Zu diesem Zeitpunkt weist der Generator 10 eine noch derart niedrige Temperatur auf, daß die mechanische Festigkeit der Rohre 12,16 und der Verschlußdeckel 28 ein Bersten des Gasgenerators 10 verhindern. Ferner ist die Aufheizung der Pellets 24 zum Zeitpunkt der Selbstzündung der Selbstzündvorrichtung 46 derart niedrig, daß deren Gasentwicklung noch so gering ist, daß das Gehäuse des Gasgenerators 10 nicht zu bersten droht.

Fig. 3 entspricht im wesentlichen Fig. 2, mit der Ausnahme, daß der Gehäusekörper (in Fig. 3 mit dem Bezugszeichen 64 versehen) bolzen- bzw. zapfenförmig nach außen über das stirnseitige Ende 30 des Gasgenerators 10 übersteht. Der Gehäusekörper 64 ist mit einem Außengewinde versehen, das bei 66 angedeutet ist. Der Gehäusekörper 64 ist mit dem Verschlußdeckel 28 verschraubt, wozu die Aufnahmedurchgangsbohrung 44 des Verschlußdeckels 28 mit einen Innengewinde versehen ist. Ansonsten ist der Aufbau der Selbstanzündvorrichtung 46 gemäß Fig. 3 gleich dem in Fig. 2 dargestellten und oben beschriebenen Aufbau.

## Patentansprüche

1. Gasgenerator, insbesondere Rohrgasgenerator für Airbag, mit
- einem Gehäuse (12,16,28) zur Aufnahme eines gasentwickelnden Materials (24) und
- mindestens einer Selbstanzündvorrichtung (46) zum Zünden des gasentwickelnden Materials (24) bei einer vorgegebenen Mindesttemperatur des Gehäuses (12,16,28), wobei
- das Gehäuse (12,16,28) lediglich im Bereich der Selbstanzündvorrichtung (46) aus einem ersten Material mit einer hohen Wärmeleitfähigkeit besteht und ansonsten aus einem zweiten Material mit einer gegenüber dem ersten Material wesentlich geringeren Wärmeleitfähigkeit besteht,
- die Selbstanzündvorrichtung (46) wärmeleitfähig mit dem Gehäuse (12,16,28) verbunden ist und
- das Gehäuse (12,16,28) auf seiner Innenseite im Bereich der Selbstanzündvorrichtung (46) eine thermische Isolation (62) aufweist,
**dadurch gekennzeichnet**, daß die Isolation (62) den aus dem ersten Material bestehenden Gehäusebereich (28) überdeckt, ohne das gasentwickelnde Material (24) gegenüber der Selbstanzündvorrichtung (46) abzuschirmen.

2. Gasgenerator nach Anspruch 1, dadurch gekennzeichnet, daß die Wärmeleitfähigkeit des ersten Materials gleich dem 10- bis 20fachen derjenigen des zweiten Materials ist.

3. Gasgenerator nach Anspruch 1 oder 2, dadurch gekennzeichnet, daß das Gehäuse ein zylindrisches, aus dem zweiten Material bestehendes Außenrohr (12) aufweist, dessen stirnseitige Enden (30) durch Verschlußdeckel (28) verschlossen sind, von denen mindestens einer aus dem ersten Material besteht, und daß die Selbstanzündvorrichtung (46) an diesem Verschlußdeckel (28) befestigt ist.

4. Gasgenerator nach Anspruch 3, dadurch gekennzeichnet, daß die Selbstanzündvorrichtung (46) ein im wesentlichen zylindrisches Gehäuse (48) aus wärmeleitfähigem Material aufweist, das in einer zentralen Aufnahmedurchgangsbohrung (44) im Verschlußdeckel (28) angeordnet ist und ein zum Außenrohrinnenraum hin offenes Sackloch (50) aufweist, in dem ein bei einer bestimmten Mindesttemperatur selbstzündendes Material (56) untergebracht ist.

5. Gasgenerator nach Anspruch 4, dadurch gekennzeichnet, daß die Sacklochöffnung (52) als Düse ausgebildet ist.

6. Gasgenerator nach Anspruch 4 oder 5, dadurch gekennzeichnet, daß die Selbstanzündvorrichtung (46) neben dem selbstzündenden Material (56) eine Verstärkungsladung (58) aufweist, die von dem selbstzündenden Material (56) zündbar ist.

7. Gasgenerator nach Anspruch 6, dadurch gekennzeichnet, daß daß selbstzündende Material (56) im Bodenbereich des Sacklochs (50) angeordnet ist und auf das selbstzündende Material (56) die Verstärkungsladung (58) aufgebracht ist, die sich zwischen dem selbstzündenden Material (56) und der Sacklochöffnung (52) befindet.

8. Gasgenerator nach einem der Ansprüche 4 bis 7, dadurch gekennzeichnet, daß das selbstzündende Material (56) und - sofern vorhanden - die Verstärkungsladung (58) in dem Sackloch (50) als homogener Preßkörper vorliegt, der gegenüber der Sacklochöffnung (52) durch eine Folie (60) abgedeckt ist.

9. Gasgenerator nach einem der Ansprüche 4 bis 8, dadurch gekennzeichnet, daß sich das Gehäuse (48) der Selbstanzündvorrichtung (46) in axialer Verlängerung des Außenrohres (12) über den Verschlußdeckel (28) hinaus erstreckt.

10. Gasgenerator nach einem der Ansprüche 4 bis 9, dadurch gekennzeichnet, daß das Gehäuse (48) der Selbstanzündvorrichtung (46) aus Aluminium oder einer Aluminium-Legierung besteht.

11. Gasgenerator nach einem der Ansprüche 1 bis 9, dadurch gekennzeichnet, daß die Selbstanzündvorrichtung (46) mit dem Gehäuse (12,16,28) durch Verschraubung oder durch eine Preßpassung verbunden ist.

12. Gasgenerator nach einem der Ansprüche 3 bis 11, dadurch gekennzeichnet, daß an jedem Verschlußdeckel (28) eine in wärmeleitfähigem Kontakt zu diesem stehende Selbstanzündvorrichtung (46) befestigt ist.

## Claims

1. Gas generator, in particular a tubular gas generator for an air bag, with
- a housing (12, 16, 28) to receive a gas generating material (24) and
- at least one self-igniting device (46) for igniting the gas generating material (24) at a predetermined minimum temperature of the housing (12, 16, 28), wherein
- the housing (12, 16, 28) consists merely in the region of the self-igniting device (46) of a first material with a high thermal conductivity and consists otherwise of a second material with a lower thermal conductivity with respect to the first material,
- the self-igniting device (46) is connected in thermally conducting manner with the housing (12, 16, 28) and
- the housing (12, 16, 28) has a thermal insulation (62) on its inside in the region of the self-igniting device (46),
characterised in that the insulation (62) covers over the region of the housing consisting of the first material, without screening the gas generating material (24) from the self-igniting device (46).

2. A gas generator according to claim 1, characterised in that the thermal conductivity of the first material is equal to 10 times to 20 times that of the second material

3. A gas generator according to claim 1 or 2, characterised in that the housing has a cylindrical outer tube (12), consisting of the first material, the front side ends (30) of which are closed by closure covers (28), at least one of which consists of the second material and in that the self-ignition device (46) is secured to the closure cover (28).

4. A gas generator according to claim 3, characterised in that the self-ignition device (46) has a substantially cylindrical housing (48) of heat-conducting material, which is arranged in a central installation through-bore (44) in the closure cover (28), and has a blind hole (50) open to the outer tube inner chamber, in which there is accommodated a material (56) which self-ignites at a fixed minimum temperature

5. A gas generator according to claim 4, characterised in that the blind hole opening (52) is formed as a nozzle.

6. A gas generator according to claim 4 or 5, characterised in that the self-ignition device (46) has, as well as the self-igniting material (56), a booster charge (58) which is able to be ignited by the self-igniting material (56).

7. A gas generator according to claim 6, characterised in that the self-igniting material (56) is arranged in the base region of the blind hole (50) and the booster charge (58) is applied to the self-igniting material (56), which charge is located between the self-igniting material (56) and the blind hole opening (52).

8. A gas generator according to one of claims 4 to 7, characterised in that the self-igniting material (56) and, if present, the booster charge (58) in the blind hole (50) is present as a homogeneous pressed body which is covered, relative to the blind hole opening (52), by a foil (60).

9. A gas generator according to one of claims 4 to 8, characterised in that the housing (48) of the self-ignition device (46) extends in the axial extent of the outer tube (12) over and beyond the closure cover (28).

10. A gas generator according to one of claims 4 to 8, characterised in that the housing (48) of the self-ignition device (46) consists of aluminium or of an aluminium alloy.

11. A gas generator according to one of claims 1 to 9, characterised in that the self-ignition device (46) is connected to the housing (12, 16, 28) by screwing or by a press fit.

12. A gas generator according to one of claims 3 to 11, characterised in that secured to each closure cover (28) there is a self-ignition device (46) in heat-conducting contact therewith.

## Revendications

1. Générateur de gaz, notamment générateur de gaz tubulaire pour coussin gonflable, comportant
- un boîtier (12, 16, 28) recevant un matériau (24) générateur de gaz et
- au moins un dispositif d'auto-allumage (46) pour allumer le matériau générateur de gaz (24) lorsque le boîtier (12, 16, 28) atteint une température minimale prédéterminée,
- le boîtier (12, 16, 28) étant composé, uniquement dans la zone du dispositif d'auto-allumage (46), d'un premier matériau doté d'une conductibilité thermique élevée et, ailleurs, d'un second matériau doté d'une conductibilité thermique sensiblement plus faible que celle du premier matériau,
- le dispositif d'auto-allumage (46) étant lié de manière thermoconductrice au boîtier (12, 16, 28) et
- le boîtier (12, 16, 28) présentant sur sa face intérieure, dans la région du dispositif d'auto-allumage (46) une isolation thermique (62),
caractérisé par le fait que l'isolation (62) recouvre la région (28) du boîtier constituée du premier matériau sans que le matériau générateur de gaz (24) soit isolé vis-à-vis du dispositif d'auto-allumage (46).

2. Générateur de gaz selon la revendication 1, caractérisé par le fait que la conductibilité thermique du premier matériau est égale à 10 à 20 fois celle du second matériau.

3. Générateur de gaz selon l'une des revendications 1 ou 2, caractérisé par le fait que le boîtier comporte un tube extérieur (12) cylindrique formé du second matériau, dont les extrémités frontales (30) sont fermées par des couvercles (28) parmi lesquels l'un est réalisé en le premier matériau et par le fait que le dispositif d'auto-allumage (46) est fixé sur ledit couvercle (28).

4. Générateur de gaz selon la revendication 3, caractérisé par le fait que le dispositif d'auto-allumage (46) comprend un boîtier (48) sensiblement cylindrique en matériau conducteur de la chaleur qui est disposé dans un trou récepteur (44) débouchant du couvercle (28) et comporte un trou borgne (50), ouvert en direction de l'espace intérieur du tube extérieur, dans lequel est logé un matériau (56) qui, à une température minimale déterminée, s'enflamme spontanément.

5. Générateur de gaz selon la revendication 4, caractérisé par le fait que l'ouverture (52) du trou borgne est agencée sous forme de buse.

6. Générateur de gaz selon la revendication 4 ou 5, caractérisé par le fait que le dispositif d'auto-allumage (46) comporte, outre le matériau (56) à inflammation spontanée, une charge amplificatrice (58) qui peut être enflammée par le matériau (56) à inflammation spontanée.

7. Générateur de gaz selon la revendication 6, caractérisé par le fait que le matériau (56) à inflammation spontanée est disposé dans la région du fond du trou borgne (50) et la charge amplificatrice (58) est appliquée sur le matériau (56) à inflammation spontanée, et est située entre le matériau (56) à inflammation spontanée et l'ouverture (52) du trou borgne.

8. Générateur de gaz selon l'une des revendications 4 à 7, caractérisé par le fait que le matériau (56) à inflammation spontanée et - dans la mesure où elle est présente - la charge amplificatrice (58) sont disposés dans le trou borgne (50) sous forme d'éléments moulés homogènes qui, côté ouverture du trou borgne (52), sont couverts par un film (60).

9. Générateur de gaz selon l'une des revendications 4 à 8, caractérisé par le fait que le boîtier (48) du dispositif (46) d'auto-allumage (46) s'étend au-delà du couvercle (28), dans le prolongement axial du tube extérieur (12).

10. Générateur de gaz selon l'une des revendications 4 à 9, caractérisé par le fait que le boîtier (48) du dispositif d'auto-allumage (46) est en aluminium ou en un alliage d'aluminium.

11. Générateur de gaz selon l'une des revendications 1 à 9, caractérisé par le fait que le dispositif d'auto-allumage (46) est lié au boîtier (12, 16, 28) par vis ou sertissage.

12. Générateur de gaz selon l'une des revendications 3 à 11, caractérisé par le fait que le dispositif d'auto-allumage (46) est fixé sur chacun des couvercles avec un contact avec celui-ci assurant la conduction thermique.
